# EUROPÄISCHE PATENTANMELDUNG

(11) **EP 1 117 026 A2**
(43) Veröffentlichungstag der Anmeldung: **18.07.2001**
(21) Anmeldenummer: 00128577.4
(22) Anmeldetag: 27.12.2000
(51) Int. Cl.: G06F 1/26

(54) **Automatisches Erhöhen der Betriebsspannung bei Peripheriegeräten**

(30) Priorität: 29.12.1999 DE 19963675
(71) Anmelder: Wincor Nixdorf GmbH & Co KG, 33106 Paderborn (DE)
(72) Erfinder: Hoffmann, Stefan, 12163 Berlin (DE)
(74) Vertreter: Schaumburg, Thoenes & Thurn

(57) **Zusammenfassung**

Die Erfindung betrifft eine Einrichtung (10) zum Betreiben eines elektrischen Gerätes, die eine Anschlußeinheit (14) hat, die mindestens ein elektrisches Gerät (50, 52, 54, 56) mit elektrischer Leistung versorgt, wobei die Versorgung in einer Initialisierungsphase des elektrischen Gerätes (50, 52, 54, 56) mit einer vorbestimmten ersten Spannung erfolgt. Das elektrische Gerät (50, 52, 54, 56) moduliert den Versorgungsstrom (80) abhängig von der benötigten Nennbetriebsspannung. Eine Steuerung (62) wertet den modulierten Versorgungsstrom (80) aus und stellt für die Betriebsphase die Nennbetriebsspannung in der Anschlußeinheit (14) ein.

## Beschreibung

Die Erfindung betrifft eine Einrichtung zum Betreiben eines elektrischen Gerätes, die eine Anschlußeinheit hat, durch die mindestens ein elektrisches Gerät mit elektrischer Leistung versorgt wird.

Anschlußeinheiten, die eine Versorgungsspannung liefern und über die Daten übertragen werden, sind in Personalcomputern, Macintosh Computern, Industriecomputern und in anderen Computern sowie in Steuereinheiten angeordnet. Anschlußeinheiten in Personalcomputern arbeiten beispielsweise nach der 1995 von der Firma Intel entwickelten USB-Schnittstellenvorgabe (Universal Serial Bus). Macintosh Computer arbeiten seit den 80er Jahren gemäß einer Apple-Desktop-Bus-Schnittstellenvorgabe. Bei Industriecomputern wird als Schnittstellenvorgabe der IEEE-1394-Standard verwendet, der auch unter dem Namen "Fire Wire" bekannt ist. Die genannten Schnittstellenvorgaben gewährleisten, daß anzuschließende Geräte auch während des Betriebs der Schnittstelle angeschlossen werden können. Solche anzuschließenden Geräte werden auch als Peripheriegeräte bezeichnet. Außerdem sind die Anschlußvorrichtungen für eine Vielzahl von Peripheriegeräten einheitlich, z.B. für Computer-Maus, Tastatur, Drucker, Kamera usw. Die Versorgung der Peripheriegeräte mit elektrischer Leistung erfolgt durch eine Stromversorgungseinheit in der Anschlußeinheit.

Die Stromversorgungseinheit ist gemäß Schnittstellenvorgabe für eine maximale Leistung ausgelegt, die für die angeschlossenen Peripheriegeräte nicht überschritten werden darf. Man unterscheidet Peripheriegeräte geringer Leistung, die beispielsweise bei einer Spannung von 5 V einen Stromfluß von 100 mA hervorrufen, und Peripheriegeräte höherer Leistung, die beispielsweise bei 5 V einen Stromfluß von bis zu 500 mA hervorrufen. Eine große Menge von anzuschließenden Geräten kann mit der gemäß der Schnittstellenvorgabe maximal zulässigen Versorgungsleistung betrieben werden. Bei den genannten Schnittstellenvorgaben handelt es sich nicht um Vorgaben für ein Bussystem, bei dem mehrere Geräte auf die gleichen Leitungen zugreifen. In einigen der genannten Schnittstellenvorgaben wird zwar die Bezeichnung "Bus" verwendet, tatsächlich handelt es sich bei den Schnittstellenvorgaben aber um sternförmig ausgelegte Schnittstellen. Peripheriegeräte eines noch höheren dritten Leistungsbereichs können nicht an den genannten Schnittstellen betrieben werden. Sie benötigen eine zusätzliche separate Stromversorgungseinheit.

Aufgabe der Erfindung ist es, eine Einrichtung anzugeben, die den Betrieb von elektrischen Geräten mit erhöhter Leistung über eine Anschlußeinheit ermöglicht.

Diese Aufgabe wird für eine Einrichtung zum Betreiben von elektrischen Geräten durch die Merkmale des Anspruchs 1 gelöst. Vorteilhafte Weiterentwicklungen werden in den abhängigen Ansprüchen angegeben.

Die Einrichtung zum Betreiben von elektrischen Geräten hat eine Anschlußeinheit, die mindestens ein elektrisches Gerät mit elektrischer Leistung versorgt, wobei die Versorgung in einer Initialisierungsphase des elektrischen Gerätes mit einer vorbestimmten ersten Spannung erfolgt. Das elektrische Gerät moduliert den Versorgungsstrom abhängig von der benötigten Nennbetriebsspannung. Eine Steuerung wertet den modulierten Versorgungsstrom aus. Abhängig vom Informationsgehalt der Modulation wird für die Betriebsphase die Nennbetriebsspannung in der Anschlußeinheit einstellt.

Durch die Erfindung ist es möglich, Peripheriegeräte, für die die Schnittstellenanschlußleistung nicht ausreichend ist, an einer solchen Schnittstelle zu betreiben. Solche Geräte enthalten beispielsweise LCD's (Liquid Cristal Display) mit Hintergrundbeleuchtung, wie sie an Registrierkassen in Verkaufsstellen eingesetzt werden. Das angeschlossene Gerät teilt der Anschlußeinheit die benötigte Nennspannung mit. Die durch das Gerät benötigte Leistung wird durch die Wahl einer höheren weiteren Versorgungsspannung bei gleichzeitigem Unterschreiten des maximal zulässigen Versorgungsstroms durch die Anschlußeinheit bereitgestellt. Einzelne Abschnitte der Schnittstelle werden somit bei einer sternförmig ausgelegten Schnittstellenstruktur mit der höheren Spannung versorgt.

Vorteilhaft ist es, als höhere weitere Versorgungsspannung eine Schutzkleinspannung zu nutzen, insbesondere eine Gleichspannung im Bereich von 5 V und 60 V, da somit gefährliche Körperströme bei Personen beim Berühren spannungsführender Teile vermieden sind. Bei Sicherheitskleinspannungen größer als 60 V Gleichspannung oder 25 V Wechselspannung ist eine Isolation spannungsführender Teile erforderlich. Steckverbinder von Schnittstellen sind im allgemeinen genormt und somit fest vorgegeben. Bei einer Spannungserhöhung muß sichergestellt sein, daß diese Steckverbinder und weitere spannungsführende Elemente eine ausreichende Spannungsfestigkeit haben.

In einer Weiterentwicklung enthält die Anschlußeinheit auch eine mit der Steuereinrichtung verbundene Überwachungseinrichtung zum Überwachen der Verbindung zum angeschlossenen Gerät. Der durch das angeschlossene Gerät verursachte Stromfluß wird somit überwacht. Unterschreitet der Stromfluß einen bestimmten Wert, so ist dies ein Zeichen dafür, daß das Gerät von der Anschlußeinheit getrennt worden ist. In diesem Fall wird die Versorgungsspannung der Schnittstelle wieder auf den normalen Wert gesenkt, um eine Zerstörung eines später angeschlossenen anderen Gerätes zu vermeiden, das eine geringere Versorgungsspannung benötigt. Die in der Anschlußeinheit integrierte Stromüberwachung kann auch zum Überwachen des modulierten Versorgungsstroms genutzt werden.

Weitere Merkmale und Vorteile der Erfindung ergeben sich aus der folgenden Beschreibung, welche in Verbindung mit den beigefügten Zeichnungen die Erfindung anhand eines Ausführungsbeispiels erläutert.

Es zeigen:
- Figur 1: ein Blockschaltbild einer Einrichtung zum Betreiben von elektrischen Geräten mit einer Anschlußeinheit, an der Peripheriegeräte angeschlossen sind, und
- Figur 2: ein Strom-Zeit Diagramm, in dem eine durch Über-bzw. Unterschreiten eines Grenzwertes generierte Bitfolge dargestellt ist.

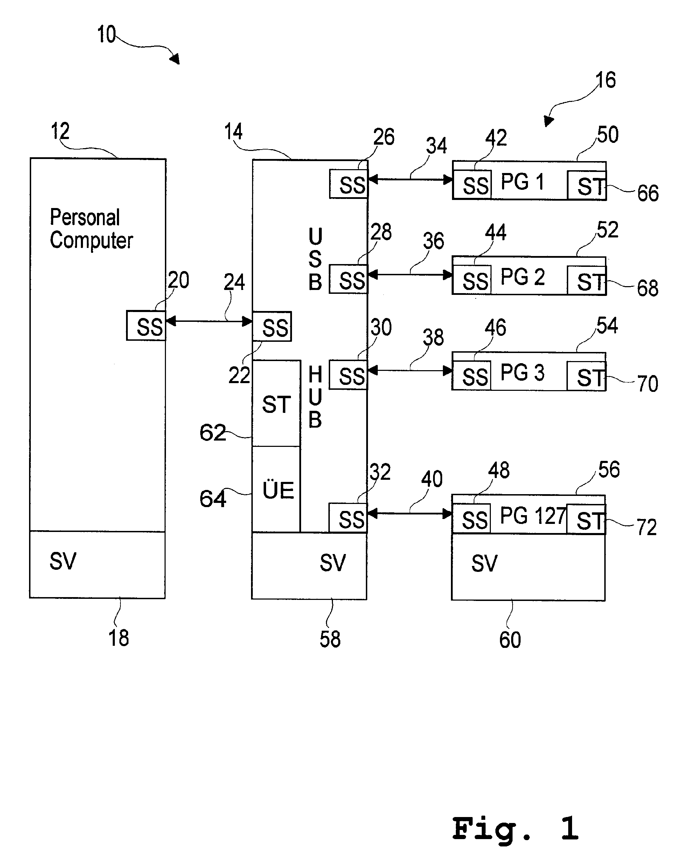

In Figur 1 ist ein Blockschaltbild einer Einrichtung 10 zum Betreiben von elektrischen Geräten mit einer Anschlußeinheit 14, an der Peripheriegeräte 50, 52, 54, 56 angeschlossenen sind, dargestellt. Die Einrichtung 10 hat einen Personalcomputer 12, eine Anschlußeinheit 14 und mehrere Peripheriegeräte 16. In dem Personalcomputer 12 ist eine Stromversorgungseinheit 18 und ein Schnittstellenanschluß 20 angeordnet. Dieser Schnittstellenanschluß 20 arbeitet nach der USB-Schnittstellenvorgabe. USB steht dabei für Universal Serial Bus. Der Personalcomputer 12 steuert die USB-Schnittstelle 22. Die Anschlußeinheit 14 hat einen Schnittstellenanschluß 22, der über eine Verbindungsleitung 24 mit dem Schnittstellenanschluß 20 des Personalcomputers 12 verbunden ist, und je einen Schnittstellenanschluß 26, 28, 30, 32, die über je eine Verbindungsleitung 34, 36, 38, 40 mit den Peripheriegeräten 42, 44, 46, 48 verbunden sind. Bei der USB-Schnittstellenvorgabe sind bis zu 127 Peripheriegeräte anschließbar. An der Anschlußeinheit 14 sind vier Peripheriegeräte 50, 52, 54, 56 angeschlossen. In anderen Ausführungsformen sind an einer solchen Anschlußeinheit üblicherweise zwei bis zehn Schnittstellenanschlüsse für Peripheriegeräte vorhanden. Im Bedarfsfall können auch weitere Anschlußeinheiten an den Schnittstellenanschlüssen angeschlossen werden, wobei an diese weitere Peripheriegeräte anschließbar sind. Solche Anschlußeinheiten werden auch als HUB bezeichnet. Die Anschlußeinheit 14 hat eine eigene Stromversorgungseinheit 58, die mehrere Versorgungsspannungen bereitstellt. Dadurch können die Peripheriegeräte 50, 52, 54, 56 mit verschiedenen Spannungen versorgt werden. Eine solche Anschlußeinheit 14 mit einer Stromversorgungseinheit 58 zum versorgen der Peripheriegeräte 50, 52, 54, 56 wird auch als Self-powerd HUB bezeichnet.

Weiterhin ist in der Anschlußeinheit 14 eine Überwachungseinheit 64 integriert, die unter anderem die Stromaufnahme eines jeden Peripheriegerätes 50, 52, 54, 56 überwacht. Beim Überschreiten der maximal zulässigen Ströme werden Fehlermeldungen generiert. Die Überwachungseinheit erfaßt auch das Unterschreiten eines minimalen Stromwerts, z.B. wenn das Peripheriegerät 50, 52, 54, 56 von der Anschlußeinheit 14 getrennt ist.

Wird nun ein Peripheriegerät 50, 52, 54, 56 an die Anschlußeinheit 14 angeschlossen, erfolgt ein Anmeldevorgang durch eine Steuerung 76, 78, 80, 82 des Peripheriegerätes 50, 52, 54, 56 am USB-Bus. Dieser Anmeldevorgang wird auch als Enumerisationsprozeß bezeichnet. Dabei wird das Peripheriegerät 50, 52, 54, 56 im Personalcomputer 12 als angeschlossen und nutzbar registriert. Die zum Betreiben des Peripheriegerätes 50, 52, 54, 56 im Personalcomputer 12 notwendigen Programmodule werden geladen und aktiviert. Während des Anmeldevorgangs nimmt das Peripheriegerät 50, 52, 54, 56 einen Strom kleiner 100 mA auf, unabhängig davon, ob es zum späteren Betrieb mehr Leistung benötigt, und verhält sich somit als Peripheriegerät 50, 52, 54, 56 mit geringem Leistungsbedarf, als sogenanntes Low Power Peripheriegerät. Baugruppen mit hohem Leistungsbedarf sind zu diesem Zeitpunkt im Peripheriegerät 50, 52, 54, 56 abgeschaltet. Nach dem Anmeldevorgang schaltet das Peripheriegerät 50, 52, 54, 56 im Falle eines Peripheriegerätes 50, 52, 54, 56 mit hohem Leistungsbedarf, einem sogenannten High Power Peripheriegerät, die Baugruppen mit hohem Leistungsbedarf zu. Das Peripheriegerät 50, 52, 54, 56 ist betriebsbereit. An den USB-Bus können nach der USB-Bus Spezifikation nur Peripheriegeräte 50, 52, 54, 56 mit einer maximalen Stromaufnahme von 500 mA angeschlossen werden. Dies ist nicht zuletzt durch die maximale Strombelastbarkeit der Steckverbinder bedingt. Um dennoch Peripheriegeräte 50, 52, 54, 56 mit einem höherem Leistungsbedarf an der USB-Schnittstelle 26, 28, 30, 32 betreiben zu können, werden diese Peripheriegeräte 56 mit einer separaten Stromversorgungseinheit 60 am USB-Bus betrieben. Am USB-Bus verhalten sich diese Peripheriegeräte 56 wie USB-Peripheriegeräte mit geringem Leistungsbedarf.

Weiterhin besteht die Möglichkeit das USB-Peripheriegerät 50, 52, 54 mit höherer Betriebsspannung zu betreiben. Solche Peripheriegeräte 50, 52, 54 zum Betreiben am USB-Bus mit erhöhter Betriebsspannung werden auch als High Voltage Peripheriegeräte bezeichnet. Die Anschlußeinheiten 14 mit der Möglichkeit zum wahlweisen Versorgen der Peripheriegeräte 50, 52, 54 mit erhöhter Betriebsspannung werden auch als High Voltage HUB's bezeichnet. Der Versorgungsstrom bleibt dabei unter 500 mA.

Ein High Voltage Peripheriegerät 50, 52, 54 verhält sich während des Anmeldevorgangs am USB-Bus gemäß USB-Spezifikation wie ein Low Power Peripheriegerät und wird durch den USB-Bus mit einer Spannung von 5 V Gleichspannung versorgt. Nach dem Anmeldevorgang schaltet die Steuerung 66, 68, 70 des Peripheriegerätes 50, 52, 54 intern eine ohmsche Last zu und ab, wodurch der Grenzwert von 100 mA sicher überschritten und unterschritten wird, jedoch wird der Grenzwert von 500 mA in keinem Fall überschritten. Durch diese Impulsfolge wird der Versorgungsstrom moduliert. Eine Steuerung 62 der Anschlußeinheit 14 vergleicht den aktuellen Stromwert mit dem Grenzwert von 100 mA und ermittelt den Informationsgehalt der Modulation. Abhängig von dem Informationsgehalt stellt die Steuerung 62 der Anschlußeinheit 14 die Nennbetriebsspannung des Peripheriegerätes 50, 52, 54 von z.B. 60 V Gleichspannung an der USB-Schnittstelle 26, 28, 30 ein. Der Betrag der zum Betreiben des Peripheriegerätes 50, 52, 54 erforderlichen Nennbetriebsspannung wird aus dem Informationsgehalt des modulierten Stroms durch die Steuerung 62 ermittelt. Wird der Strom nicht vom Peripheriegerät 50, 52, 54 moduliert oder kann aus dem modulierten Strom keine Information ermittelt werden, wird die normale Busspannung des USB-Buses von 5 V Gleichspannung beibehalten.

Nach dem Entfernen des Peripheriegerätes 50, 52, 54, 56 vom USB-Bus, z.B. durch Trennen der Verbindung 34, 36, 38, 40 zwischen Peripheriegerät 50, 52, 54, 56 und der Anschlußeinheit 14 oder durch Abschalten des Peripheriegerätes 50, 52, 54, 56, detektiert die Überwachungseinheit 64, daß kein Stromfluß über die Schnittstelle 26, 28, 30, 32 vorhanden ist. Daraufhin werden im Personalcomputer 12 die zum Betreiben des Peripheriegerätes 50, 52, 54, 56 notwendigen Programmodule deaktiviert. Weiterhin schaltet die Steuerung 62 der Anschlußeinheit 14 die erhöhte Spannung auf die normale Busspannung von 5 V Gleichspannung zurück, um eine Zerstörung eines im folgenden an diese Schnittstelle 26, 28, 30, 32 angeschlossenen weiteren Peripheriegerätes zu vermeiden. Das neu angeschlossene Peripheriegerät meldet sich am USB-Bus an und wird im Personalcomputer 12 registriert. Es hat danach die Möglichkeit durch eine Strommodulation die benötigte Nennbetriebsspannung der Anschlußeinheit 14 mitzuteilen. Die Anschlußeinheit 14 stellt dann die durch das neu angeschlossene Peripheriegerät benötigte Nennbetriebsspannung an der USB-Schnittstelle 26, 28, 30, 32 ein.

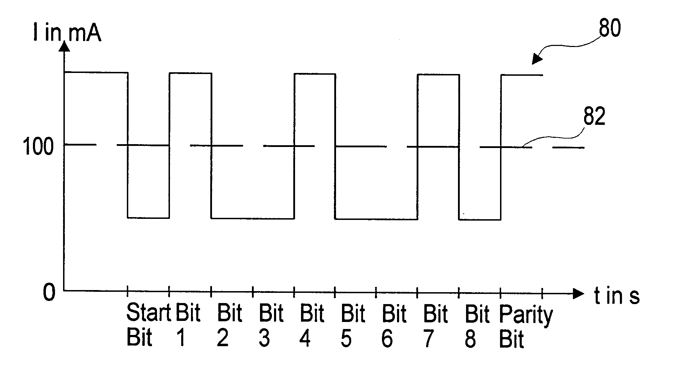

In Figur 2 ist ein Strom-Zeit Diagramm dargestellt, welches zeigt, daß durch Über- bzw. Unterschreiten eines Grenzwertes eine Bitfolge generiert ist. Die Zeit t ist auf der Abszissenachse und der Strom I auf der Ordinatenachse angetragen. Der modulierte Stromverlauf ist durch den mit 80 bezeichnete Graph dargestellt und der Graph des über- bzw. unterschrittenen Grenzwert ist mit 82 bezeichnet. Je nach voreingestellter Datenübertragungsrate, die z.B. 1 bis 1200 Baud beträgt, ergeben sich unterschiedliche Zeitabstände zwischen den einzelnen Bits. Die Einteilung der Zeitachse erfolgt an Hand der durch den Stromverlauf resultierenden Bitfolge. Aus der Bitfolge wird die Information über die Nennbetriebsspannung für das angeschlossenen Peripheriegerät 50, 52, 54, 56 durch die Steuerung 62 der Anschlußeinheit 14 ermittelt.

### Bezugszeichenliste

- 10: Einrichtung zum Betreiben von elektrischen Geräten
- 12: Personalcomputer
- 14: Anschlußeinheit
- 16: Peripheriegeräte
- 18: Stromversorgungseinheit
- 20, 22: Schnittstellenanschluß
- 24: Verbindungsleitung
- 26 bis 32: Schnittstellenanschluß
- 34 bis 40: Verbindungsleitung
- 42 bis 48: Schnittstellenanschluß
- 50 bis 56: Peripheriegerät
- 58, 60: Stromversorgungseinheit
- 62: Steuereinheit
- 64: Überwachungseinheit
- 66 bis 72: Steuereinheit
- 80: modulierter Stromverlauf
- 82: Grenzwert

## Patentansprüche

1. Einrichtung zum Betreiben von elektrischen Geräten, mit einer Anschlußeinheit (14), die mindestens ein elektrisches Gerät (50, 52, 54, 56) mit elektrischer Leistung versorgt,
wobei die Versorgung in einer Initialisierungsphase des elektrischen Gerätes (50, 52, 54, 56) mit einer vorbestimmten ersten Spannung erfolgt,
das elektrische Gerät (50, 52, 54, 56) den Versorgungsstrom abhängig von der benötigten Nennbetriebsspannung moduliert,
eine Steuerung (62) den modulierten Versorgungsstrom auswertet
und abhängig vom Informationsgehalt der Modulation für die Betriebsphase die Nennbetriebsspannung in der Anschlußeinheit (14) einstellt.

2. Einrichtung nach Anspruch 1, dadurch **gekennzeichnet**, daß die Modulation durch eine Amplitudenmodulation erfolgt.

3. Einrichtung nach einem der vorhergehenden Ansprüche, dadurch **gekennzeichnet**, daß die Information durch eine Impulsfolge (80) des Versorgungsstroms definiert ist, wobei ein Stromgrenzwert (82) über- und unterschritten wird.

4. Einrichtung nach Anspruch 3, dadurch **gekennzeichnet**, daß der Grenzwert (82) 100 mA beträgt.

5. Einrichtung nach einem der vorhergehenden Ansprüche, dadurch **gekennzeichnet**, daß die Modulation des Versorgungsstroms durch Zu- und Abschalten einer ohmschen Last im Gerät (50, 52, 54, 56) erfolgt.

6. Einrichtung nach einem der vorhergehenden Ansprüche, dadurch **gekennzeichnet**, daß die erste Spannung eine Gleichspannung von 5 V ist.

7. Einrichtung nach einem der vorhergehenden Ansprüche, dadurch **gekennzeichnet**, daß die Nennbetriebsspannung eine Sicherheitskleinspannung ist.

8. Einrichtung nach Anspruch 7, dadurch **gekennzeichnet,** daß die Nennbetriebsspannung eine Gleichspannung im Bereich zwischen 5 V und 60 V ist.

9. Einrichtung nach einem der vorhergehenden Ansprüche, dadurch **gekennzeichnet,** daß zwischen der Anschlußeinheit (14) und dem Gerät (50, 52, 54, 56) eine Vielzahl von Datenleitungen vorgesehen sind.

10. Einrichtung nach einem der vorhergehenden Ansprüche, dadurch **gekennzeichnet**, daß das mit der Anschlußeinheit (14) verbundene Gerät (50, 52, 54, 56) nach einer Schnittstellenvorgabe arbeitet.

11. Einrichtung nach Anspruch 10, dadurch **gekennzeichnet,** daß die Schnittstellenvorgabe eine USB (Universal Serial Bus) Schnittstellenvorgabe ist.

12. Einrichtung nach einem der vorhergehenden Ansprüche, dadurch **gekennzeichnet**, daß bei der Modulation der Strom von 500 mA durch das Gerät (50, 52, 54, 56) nicht überschritten wird.

13. Anschlußeinheit nach einem der vorhergehenden Ansprüche, dadurch **gekennzeichnet**, daß die Anschlußeinheit (14) eine Überwachungseinrichtung (64) zum Überwachen der Verbindung zum Gerät (50, 52, 54, 56) enthält.

14. Einrichtung nach Anspruch 13, dadurch **gekennzeichnet**, daß die Überwachungseinheit (64) ein Trennen des Gerätes (50, 52, 54, 56) von der Anschlußeinheit (14) durch Überwachen des Versorgungsstroms feststellt.

15. Einrichtung nach einem der vorhergehenden Ansprüche, dadurch **gekennzeichnet**, daß die Steuerung (62) nach dem Trennen des Gerätes (50, 52, 54, 56) von der Anschlußeinheit (14) in der Anschlußeinheit (14) die erste Spannung wieder einstellt.

16. Einrichtung nach einem der vorhergehenden Ansprüche, dadurch **gekennzeichnet,** daß der Versorgungsstrom mit einer Datenübertragungsrate von 1 bis 1200 Baud moduliert wird.

17. Einrichtung nach einem der vorhergehenden Ansprüche, dadurch **gekennzeichnet,** daß die Anschlußeinheit (14) in einer Datenverarbeitungsanlage, insbesondere in einem Personalcomputer (12), angeordnet ist.

18. Anschlußeinheit, dadurch **gekennzeichnet,** daß sie mindestens ein elektrisches Gerät (50, 52, 54, 56) mit elektrischer Leistung versorgt, wobei das Versorgen in einer Initialisierungsphase mit einer ersten vorbestimmten Spannung erfolgt,
daß eine Steuerung (62) in der Anschlußeinheit (14) den von dem angeschlossenen Gerät (50, 52, 54, 56) gemäß der benötigten Nennbetriebsspannung modulierten Versorgungsstroms auswertet,
und daß die Steuerung (62) abhängig vom Informationsgehalt der Modulation für die Betriebsphase die Nennbetriebsspannung einstellt.
